# EUROPEAN PATENT SPECIFICATION

(11) **EP 4 091 895 B1**
(45) Date of publication and mention of the grant of the patent: **23.10.2024**
(21) Application number: 22170769.8
(22) Date of filing: 29.04.2022
(51) Int. Cl.: B60W 30/18, B60W 50/14, B60W 50/16, B60W 30/02

(54) **CONTROLLER AND CONTROL METHOD**
STEUERGERÄT UND STEUERUNGSVERFAHREN
ORGANE DE COMMANDE ET PROCÉDÉ DE COMMANDE

(30) Priority: 18.05.2021 JP 2021084053
(43) Date of publication of application: 23.11.2022
(73) Proprietor: Robert Bosch GmbH, 70442 Stuttgart (DE)
(72) Inventor: Yamada, Yasuo, Yokohama-shi, Kanagawa, 2248501 (JP)

(56) References cited:
- CN-A- 107 264 697
- CN-A- 110 077 510
- DE-A1- 102017 209 622
- CONDÉ NAST: "Honda's Self-Balancing Rider Assist Motorcycle is Perfect for Novice Riders | WIRED", 6 January 2017 (2017-01-06), XP055964183, Retrieved from the Internet <URL:https://www.wired.com/2017/01/hondas-self-balancing-motorcycle-perfect-noobs/> [retrieved on 20220923]

## Description

### TECHNICAL FIELD

The present invention relates to a controller and a control method capable of improving safety of a lean vehicle.

### BACKGROUND

Techniques regarding lean vehicles such as motorcycles are known. For example, assistance operations executed for assisting a rider to improve safety are known.

JP 2009-116882 A teaches such an assistance operation. According to the assistance operation, a sensor device obtains information by detecting an object located in front of a lean vehicle in a traveling direction of the lean vehicle or substantially in the traveling direction. The assistance operation generates a warning, based on the information, to notify a driver of the lean vehicle that the lean vehicle is approaching the object inappropriately.

Lean vehicles are different from four-wheel vehicles because a rider of a lean vehicle stands on the rider's feet to support the lean vehicle when stopping the lean vehicle. As such, for a purpose of improving safety, it is required to assist the rider to prevent the rider or the lean vehicle from falling down.

Conde Nast: "Honda's Self-Balancing Rider Assist Motorcycle is Perfect for Novice Riders | WIRED", 6 January 2017 (2017-01-06), XP055964183 discloses a balancing-assist for motorcycles. A controller takes the leaning angle to generate balancing steering inputs in case the motorcycle drives below a certain speed, even if it stands.CN 107 264 697 B discloses an autonomous unmanned motorcycle. The motorcycle propagates the road condition into the driving control, when driving.

CN 110 077 510 A discloses a self-balancing electric motorcycle with semi-automatic driving function.

DE 2017 209 622 A1 discloses a method for raising or lowering the chassis of a single-track motor vehicle independently of the driver, in which the present driving situation is determined and the chassis is raised or lowered independently of the driver depending on the present driving situation.

EP 1 935 733 A1 estimates the road gradient as function of a corrected longitudinal acceleration.

### SUMMARY

The present invention addresses the above-described issues. It is an objective of the present inventionto provide a controller and a control method that improve safety of a lean vehicle.

As one aspect of the present invention, a controller is provided for an assistance system that executes an assistance operation for a rider of a lean vehicle. The controller includes an execution section and an acquisition section. The execution section operates the assistance system to execute the assistance operation. The acquisition section acquires a road surface information as information about a road surface on which the lean vehicle is traveling. The execution section operates the assistance system to execute, as the assistance operation, a stop-assistance operation based on the road surface information to assist the rider in stabilizing a stop posture of the rider.

As one aspect of the present invention, a control method is provided for an assistance system that executes an assistance operation for a rider of a lean vehicle. The control method includes: executing, using an execution section of the controller, the assistance operation in a manner that the execution section operates the assistance system to execute the assistance operation; and acquiring, using an acquisition section of the controller, a road surface information as information about a road surface on which the lean vehicle is traveling. The execution section operates the assistance system to execute, as the assistance operation, a stop-assistance operation based on the road surface information to assist the rider in stabilizing a stop posture of the rider.

According to the present invention, the execution section operates the assistance system to execute the assistance operation. The acquisition section that acquires the road surface information as information about the road surface on which the lean vehicle is traveling. The execution section operates the assistance system to execute, as the assistance operation, the stop-assistance operation based on the road surface information to assist the rider in stabilizing a stop posture of the rider. Therefore, a posture of the lean vehicle when the lean vehicle is stopped can be stable, the rider and the lean vehicle can be prevented from falling down. Thus, safety of the lean vehicle can be improved.

### DRAWINGS

Fig. 1 is a schematic view illustrating a configuration of a lean vehicle according to one embodiment of the present invention.
Fig. 2 is a block diagram illustrating an exemplary functional configuration of a controller according to one embodiment of the present invention.
Fig. 3 is a flowchart illustrating an example of a control flow executed by a controller to execute a notification operation as a stop-assistance operation according to one embodiment of the present invention.
Fig. 4 is a back view illustrating the lean vehicle on a road tilted with respect to a lateral direction according to one embodiment of the present invention.
Fig. 5 is a back view of the lean vehicle illustrating a situation where a road surface has a recessed portion.

### DETAILED DESCRIPTION

A description will hereinafter be made on a controller according to the present invention with reference to the drawings.

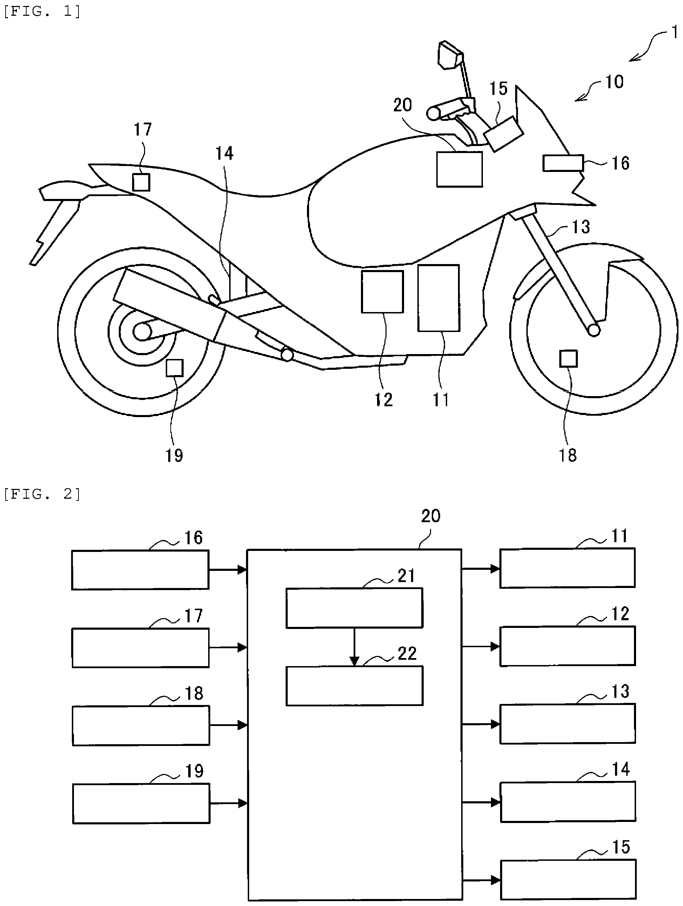

The following description will be made on the controller that is used for a two-wheeled motorcycle (see a lean vehicle 1 in Fig. 1). However, a vehicle as a control target of the controller according to the present inventiononly needs to be a lean vehicle, and may be a lean vehicle other than the two-wheeled motorcycle. The lean vehicle means a vehicle, a body of which is tilted to the right when turning in a right direction and is tilted to the left when turning in a left direction. Examples of the lean vehicle are motorcycles (the two-wheeled motor vehicle and a three-wheeled motor vehicle) and pedal-driven vehicles. The motorcycles include a vehicle having an engine as a power source, a vehicle having an electric motor as a power source, and the like. Examples of the motorcycles are a motorbike, a scooter, and an electric scooter. The pedal-driven vehicle means a vehicle capable of traveling forward on a road by a depression force applied to pedals by a rider. Examples of the pedal-driven vehicle are a normal pedal-driven vehicle, an electrically-assisted pedal-driven vehicle, and an electric pedal-driven vehicle.

In addition, the following description will be made on a case where the engine (more specifically, an engine 11 in Fig. 1, which will be described below) is mounted as a drive source that can output power for driving a wheel. However, as the drive source, a drive source other than the engine (for example, an electric motor) may be mounted, or plural drive sources may be mounted.

A configuration, operation, and the like, which will be described below, merely constitute one example. The controller and the control method according to the present inventionare not limited to a case with such a configuration, such operation, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Lean Vehicle>

A description will be made on a configuration of the lean vehicle 1 according to an embodiment of the present invention with reference to Fig. 1 and Fig. 2.

Fig. 1 is a schematic view illustrating an outline configuration of the lean vehicle 100. Fig. 2 is a block diagram illustrating an exemplary functional configuration of a controller 20.

The lean vehicle 1 is a two-wheeled motorcycle that corresponds to an example of the lean vehicle according to the present invention. As illustrated in Fig. 1, the lean vehicle 1 includes the engine 11, a hydraulic pressure control unit 12, a front suspension 13, a rear suspension 14, a notification device 15, a surrounding environment sensor 16, an inertial measurement unit (IMU) 17, a front-wheel rotational frequency sensor 18, a rear-wheel rotational frequency sensor 19, and the controller (ECU) 20.

The lean vehicle 1 includes an assistance system 10 that executes an assistance operation that assists the rider in driving the lean vehicle 1. The assistance system 10 includes the above components. For example, the components include the engine 11, the hydraulic pressure control unit 12, the front suspension 13, the rear suspension 14, the notification device 15, the surrounding environment sensor 16, the inertial measurement unit 17, the front-wheel rotational frequency sensor 18, the rear-wheel rotational frequency sensor 19, and the controller 20.

The engine 11 corresponds to an example of a drive source of the lean vehicle 1 and can output power for driving a wheel. For example, the engine 11 is provided with: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount to the combustion chamber varies according to a throttle opening amount as an opening degree of the throttle valve.

The hydraulic pressure control unit 12 is a unit that has a function of controlling a braking force to be generated on the wheel. For example, the hydraulic pressure control unit 12 includes components (for example, a control valve and a pump) that are provided to an oil channel connecting a master cylinder and a wheel cylinder and control a brake hydraulic pressure in the wheel cylinder. The braking force to be generated on the wheel is controlled by controlling operation of the components in the hydraulic pressure control unit 12. Here, the hydraulic pressure control unit 12 may control the braking force to be generated on each of a front wheel and a rear wheel or may only control the braking force to be generated on one of the front wheel and the rear wheel.

Each of the front suspension 13 and the rear suspension 14 is interposed between a trunk of the lean vehicle 1 and the respective wheel. The front suspension 13 is provided in an extendable/retractable manner to a front fork connecting a handlebar and the front wheel. The rear suspension 14 connects a swing arm and the trunk, and is provided in the extendable/retractable manner. The swing arm is swingably supported by the trunk and holds the rear wheel in a freely turnable manner. More specifically, each of the front suspension 13 and the rear suspension 14 includes a spring and a damper. When the spring and the damper are extended/retracted along an axial direction of the suspension, vibration from a road surface is absorbed, which suppresses transmission of the vibration to a body of the lean vehicle 1.

The notification device 15 notifies the rider. The notification device 15 has a sound output function and a display function. The sound output function is a function to output sound and is implemented by a speaker, for example. The display function is a function to show information visually and is implemented by a liquid-crystal display, a lamp, or the like, for example.

The surrounding environment sensor 16 detects surrounding environment information related to environment around the lean vehicle 1. For example, the surrounding environment sensor 16 is provided to a front portion of the trunk of the lean vehicle 1, and detects the surrounding environment information in front of the lean vehicle 1. The surrounding environment information detected by the surrounding environment sensor 16 is output to the controller 20.

The surrounding environment sensor 16 detects surrounding environment information behind or on a lateral side of the lean vehicle 1. For example, in addition to or instead of the surrounding environment sensor 16 that detects the surrounding environment information in front of the lean vehicle 1, the surrounding environment sensor 16 that detects the surrounding environment information behind the lean vehicle 1 may be provided to the lean vehicle 1. Alternatively, in addition to or instead of the surrounding environment sensor 16 that detects the surrounding environment information in front of the lean vehicle 1, the surrounding environment sensor 16 that detects the surrounding environment information about the lateral side of the lean vehicle 1 may be provided to the lean vehicle 1.

The surrounding environment information detected by the surrounding environment sensor 16 may be information about a distance to or an orientation of a target object located around the lean vehicle 1 (for example, a relative position, a relative distance, a relative speed, relative acceleration, or the like), or may be a characteristic of the target object located around the motorcycle 1 (for example, a type of the target object, a shape of the target object itself, a mark on the target object, or the like). Examples of the surrounding environment sensor 16 are a radar, a Lidar sensor, an ultrasonic sensor, and a camera.

However, the surrounding environment information can also be detected by a surrounding environment sensor mounted to another vehicle or by an infrastructure facility. In other words, the controller 20 can also acquire the surrounding environment information via wireless communication with the other vehicle or the infrastructure facility.

The inertial measurement unit 17 includes a three-axis gyroscope sensor and a three-directional acceleration sensor and detects a posture of the lean vehicle 1. The inertial measurement unit 17 is provided to the trunk of the lean vehicle 1, for example. For example, the inertial measurement unit 17 detects a lean angle of the lean vehicle 1 and outputs a detection result. The inertial measurement unit 17 may detect another physical quantity that can substantially be converted to the lean angle of the lean vehicle 1. The lean angle corresponds to an angle representing an inclination in a rolling direction of the body (more specifically, the trunk) of the lean vehicle 1 with respect to an upper vertical direction. The inertial measurement unit 17 may only include parts of the three-axis gyroscope sensor and the three-directional acceleration sensor.

The front-wheel rotational frequency sensor 18 is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 18 may detect another physical quantity that can substantially be converted to the rotational frequency of the front wheel. The front-wheel rotational frequency sensor 18 is provided to the front wheel.

The rear-wheel rotational frequency sensor 19 is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 19 may detect another physical quantity that can substantially be converted to the rotational frequency of the rear wheel. The rear-wheel rotational frequency sensor 19 is provided to the rear wheel.

The controller 20 controls the assistance system 10. For example, the controller 20 is partially or entirely constructed of a microcomputer, a microprocessor unit, or the like. Alternatively, the controller 20 may partially or entirely be constructed of one whose firmware and the like can be updated or may partially or entirely be a program module or the like that is executed by a command from a CPU or the like, for example. The controller 20 may be provided as one unit or may be divided into multiple units, for example.

As illustrated in Fig. 2, the controller 20 includes an acquisition section 21 and an execution section 22, for example. The controller 20 communicates with each of the devices in the assistance system 10.

The acquisition section 21 acquires information from each of the devices in the assistance system 10, and outputs signals corresponding to the acquired information. The execution section 22 receives the signals, i.e., the information. For example, the acquisition section 21 acquires information from the surrounding environment sensor 16, the inertial measurement unit 17, the front-wheel rotational frequency sensor 18, and the rear-wheel rotational frequency sensor 19. According to the present invention, acquiring information may include extracting information and/or generating information.

Specifically, the acquisition section 21 acquires a road surface information that is information about the road surface on which the lean vehicle 1 travels. The execution section 22 uses the road surface information acquired by the acquisition section 21 during processes to execute an assistance operation.

The execution section 22 has the assistance system 10 execute the assistance operation. The assistance operation assists the rider in driving the lean vehicle 1 and may include various assistance operations. For example, the assistance operation includes a notification operation that generates a warning to the rider. During the assistance operation, the execution section 22 appropriately controls the engine 11, the hydraulic pressure control unit 12, the front suspension 13, the rear suspension 14, and/or the notification device 15.

For example, the execution section 22 has the assistance system 10 execute a stop-assistance operation. The stop-assistance operation is an operation that assists the rider in stopping the lean vehicle with a stable posture. Specifically, since the rider stands on the rider's feet when stopping the lean vehicle 1, the stop-assistance operation assists the rider in stabilizing a stopping posture of the rider and/or a stopping posture of the lean vehicle 1. As an example, the stop-assistance operation assists the rider in stabilizing one of the stopping posture of the rider and the stopping posture of the lean vehicle 1. The stop-assist operation will be described in greater detail later.

As described above, the controller 20, using the execution section 22, has the assistance system 10 execute the stop-assistance operation as the assistance operation. The stop-assistance operation assists the rider in stabilizing the stop posture of the rider and/or the stop posture of the lean vehicle 1. Specifically, the execution section 22 has the assistance system 10 execute the stop-assistance operation based on the road surface information acquired by the acquisition section 21. Accordingly, safety of the lean vehicle 1 can be improved. Processes performed in the stop-assistance operation by the controller 20 will be described in greater detail later.

### <Operation of Controller>

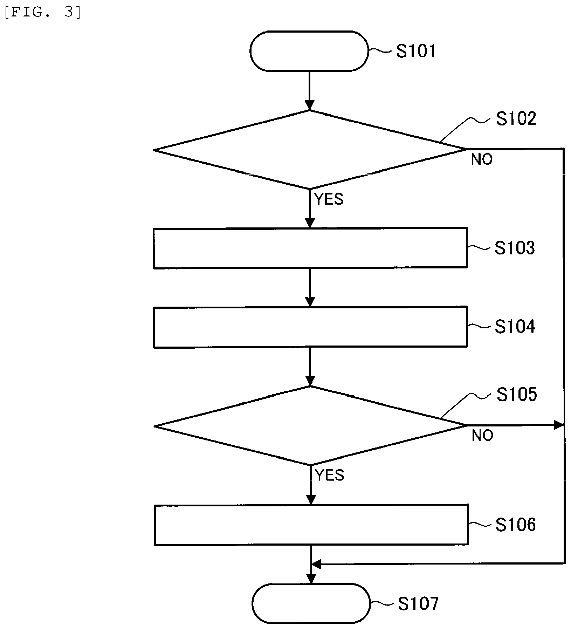

With reference to Fig. 3 to Fig. 5, the processes performed by the controller 20 according to the present embodiment will be described hereafter.

As described above, according to the present embodiment, the execution section 22 of the controller 20 has the assistance system 10 execute the stop-assistance operation based on the road surface information acquired by the acquisition section 21. For example, the execution section 22 executes a notification operation as the stop-assistance operation according to the present embodiment. However, it should be understood that the execution section 22 may execute, as the stop-assistance operation, various operations other than the notification operation. The execution section 22 may execute the stop-assistance operation while the lean vehicle 1 is decelerated by the rider performing braking operations. Alternatively, the execution section 22 may execute the stop-assistance operation while the lean vehicle 1 is decelerated automatically, e.g., by the controller 20. The automatic deceleration can be performed separately from the braking operations performed by the rider. i.e., regardless of the braking operation performed by the rider. Alternatively, the automatic deceleration can be performed in addition to the braking operations performed by the rider to adjust excess and deficiency in the braking operation performed by the rider.

Fig. 3 is a flowchart illustrating an example of a control flow executed by the controller 20 to execute a notification operation as a stop-assistance operation according to the embodiment of the present invention. The control flow illustrated in Fig. 3 is repeatedly executed at a specified time interval. The specified time interval may be set in advance. The control flow starts at S101 and ends at S107 according to the flow chart shown in Fig. 3.

When the control flow illustrated in Fig. 3 is initiated, the control flow advances to S102. At S102, the execution section 22 determines whether it is predicted that the lean vehicle 1 will be stopped. If it is determined that the lean vehicle 1 will be stopped (YES at S102), the control flow advances to S103. On the other hand, if it is determined that the lean vehicle 1 will not be stopped (NO at S102), the control flow illustrated in Fig. 3 ends.

For example, the execution section 22 determines whether the lean vehicle 1 is predicted to be stopped based on a speed and a deceleration of the lean vehicle 1. The speed of the lean vehicle 1 may be acquired based on the detection result of the front-wheel rotational frequency sensor 18 and the detection result of the rear-wheel rotational frequency sensor 19. The deceleration of the lean vehicle 1 may be acquired based on a transition of the speed of the lean vehicle 1.

Alternatively, the execution section 22 may determine whether the lean vehicle 1 is predicted to be stopped based on presence or absence of an obstacle in front of the lean vehicle 1. The presence or the absence of the obstacle in front of the lean vehicle 1 can be acquired based on a detection result of the surrounding environment sensor 16.

Alternatively, the execution section 22 may determine whether the lean vehicle 1 is predicted to be stopped based on a traffic light color of a traffic light in front of the lean vehicle 1. For example, the traffic light color may be acquired based on the detection results of the surrounding environment sensor 16.

If it is determined YES at S102 the control flow advances to S103. At S103, the acquisition section 21 acquires the road surface information that is the information about the road surface on which the lean vehicle 1 travels. When the road surface information is acquired, the control flow advances to S104. At S104, based on the road surface information, the execution section 22 evaluates a degree of danger that occurs at the time when the lean vehicle 1 is stopped and the rider stands on the rider's feet.

According to the control flow illustrated in Fig. 3, the execution section 22 has the assistance system 10 execute, as the stop-assistance operation, the notification operation based on the degree of danger evaluated at S104. In other words, the execution section 22 has the assistance system 10 execute, as the stop-assistance operation, the notification operation based on the road surface information acquired at step S103 eventually.

The road surface information acquired at S103 is information about a condition of the road surface on which the lean vehicle 1 is traveling and includes various types of information. For example, the acquisition section 21 may acquire the road surface information based on the surrounding environment information of the lean vehicle 1. Alternatively, the acquisition section 21 may acquire the road surface information based on the detection result of the inertial measurement unit 17. An example of the information acquired as the road surface information at S103 and an example of evaluating, at S104, the degree of danger based on the road surface information.

The road surface information includes information about a gradient of the road surface on which the lean vehicle 1 is traveling. The information will be referred to as a slope information hereafter. The slope information includes, for example, information about a degree of the slope (i.e., the gradient) of the road surface. For example, the degree of the slope, i.e., the gradient is a slope angle. The slope information may include information about a slope direction that is a direction to which direction the road surface is tilted, i.e., is inclined or declined.

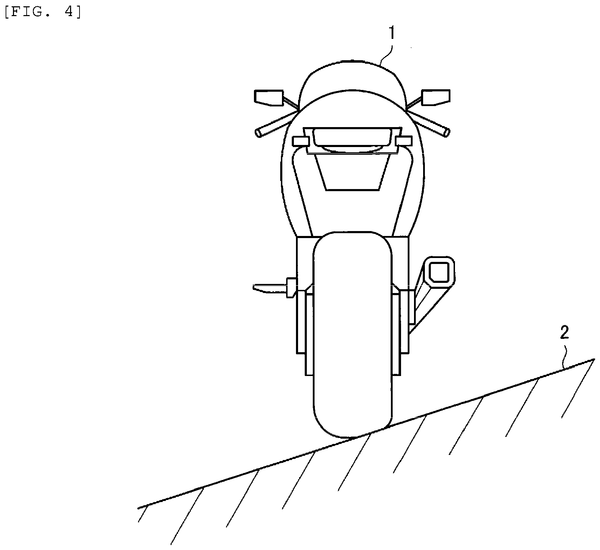

Fig. 4 is a back view illustrating the lean vehicle 1 on a road surface 2 tilted with respect to a lateral direction according to one embodiment of the present invention. The lateral direction is, i.e., a left-right direction of the lean vehicle 1. According to the example illustrated in Fig. 4, the road surface 2 is inclined toward a right side in the lateral direction. In this case, the acquisition section 21 acquires the slope angle of the road surface 2 as the slope information. In addition, the acquisition section 21 acquires, as the slope information, information about how the road surface is sloped, i.e., information indicating that the road surface 2 is inclined toward the right side in the lateral direction.

When the camera is used as the surrounding environment sensor 16, the acquisition section 21 may acquire the slope information by performing an image recognition processing with respect to an image captured by the camera. For example, the acquisition section 21 identifies a wall surface of a tunnel captured in the image. The acquisition section 21 may also detect a position of a lane marking on the road surface, e.g., a boundary line defining traveling lanes, and/or a direction along which the lane marking (i.e., the boundary line) extends. Then, the acquisition section 21 acquires the slope information based on such detection results. However, the acquisition section 21 may acquire the slope information based on the surrounding environment information that is acquired by the surrounding environment sensor 16 other than the camera (e.g., the Lidar sensor). In addition, the acquisition section 21 may acquire the slope information with greater accuracy by further considering a lean angle of the lean vehicle 1. The inertial measurement unit 17 may acquire the lean angle of the lean vehicle 1.

For example, the stop posture of the lean vehicle 1 when the lean vehicle 1 is stopped tends to be unstable as the slope angle of the road surface 2 increases. As such, the execution section 22 may evaluate the degree of danger at the time when the rider stands on the rider's feet based on how the slope angle of the road surface 2 is big. Here, the road surface information may be information about a gradient in a front-rear direction. The acquisition section 21 may acquire the information about the gradient in the front-rear direction based on the detection result of the inertial measurement unit 17, e.g., a pitch angle of the lean vehicle 1.

For example, the road surface information includes information about an unevenness of the road surface 2. The information about the unevenness will be referred to as an unevenness information hereafter. The unevenness information includes information about whether the road surface 2 has a recessed portion such as a recessed portion or a crack. The unevenness information also includes information about whether the road surface 2 has a protrusion, e.g., a rock located on the road surface 2. The unevenness information also includes information about a position of the recessed portion or the protrusion in the road surface 2.

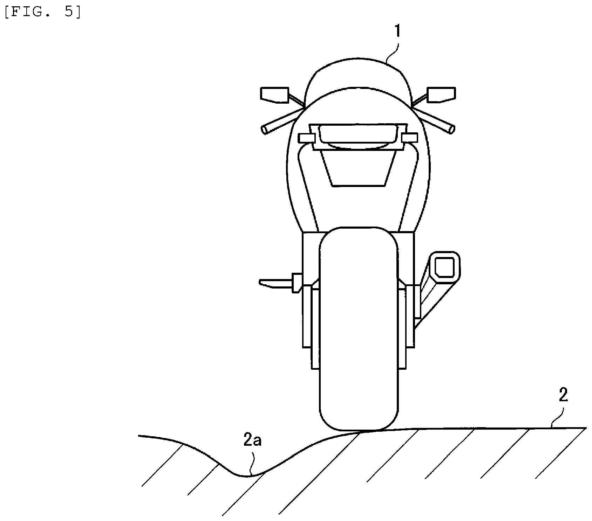

Fig. 5 is a back view of the lean vehicle 1 illustrating a situation where the road surface 2 has a recessed portion 2a. According to the example illustrated in Fig. 5, the road surface 2 has the recessed portion 2a on a left side of the lean vehicle 1. In this case, the acquisition section 21 acquires, as the unevenness information, information indicating that there is the recessed portion 2a on the road surface 2. In addition, the acquisition section 21 acquires, as the unevenness information, information indicating that the recessed portion 2a is located on the left side of the lean vehicle 1.

When the camera is used as the surrounding environment sensor 16, the acquisition section 21 may acquire the unevenness information, for example, by performing the image recognition processing with respect to the image captured by the camera. For example, the acquisition section 21 can acquire the unevenness information from the image captured by the camera by using a method such as machine learning. However, the acquisition section 21 may acquire the unevenness information based on the surrounding environment information that is acquired by the surrounding environment sensor 16 other than the camera (e.g., the Lidar sensor).

For example, it is assumed that the stop posture of the lean vehicle 1 becomes more unstable as a quantity of the recessed portions and/or a quantity of the protrusions on the road surface 2 is increased. In addition, for example, it is assumed that the stop posture of the lean vehicle 1 becomes more unstable as a depth of the recessed portion or a height of the protrusion formed in the road surface 2 is increased. Thus, the execution section 22 may evaluate the degree of danger at the time when the rider stands on the rider's feet on the road surface 2, based on: the quantity of the recessed portion, a dimension of the recessed portion, the quantity of the protrusion and/or a dimension of the protrusion formed on the road surface 2.

The road surface information may include information about a pavement condition of the road surface 2. The information about the pavement condition will be referred to as a paved surface information hereafter. The paved surface information includes information about whether the road surface 2 is unpaved. The paved surface information can also include information about a ratio of an unpaved area in the road surface 2.

When the camera is used as the surrounding environment sensor 16, the acquisition section 21 may acquire the paved surface information, e.g., by performing the image recognition processing with respect to the image captured by the camera. For example, the acquisition section 21 may acquire the paved surface information from the image captured by the camera by using the method such as machine learning. However, the acquisition section 21 may acquire the paved surface information based on the surrounding environment information that is acquired by the surrounding environment sensor 16 other than the camera (e.g., the Lidar sensor).

For example, it is assumed that the stop posture of the lean vehicle 1 becomes more unstable when the road surface 2 is unpaved as compared to the stop posture of the lean vehicle on the road surface 2 is paved. Thus, the execution section 22 can evaluate the degree of danger at the time when the rider stands on the rider's feet on the road surface 2 based on whether the road surface 2 is unpaved or the ratio of the unpaved area in the road surface 2.

The road surface information can include information about a degree of freezing of the road surface 2. The information about the degree of freezing of the road surface 2 will be referred to as a frozen degree information. The frozen degree information includes information about whether the road surface 2 is frozen. The frozen degree information also includes information about a ratio of a frozen area in the road surface 2.

When the camera is used as the surrounding environment sensor 16, the acquisition section 21 may acquire the frozen degree information, e.g., by performing the image recognition processing with respect to the image captured by the camera. For example, the acquisition section 21 may acquire the frozen degree information from the image captured by the camera by using the method such as machine learning. However, the acquisition section 21 may acquire the frozen degree information based on the surrounding environment information that is acquired by the surrounding environment sensor 16 other than the camera. In such a case, the surrounding environment sensor 16 is, e.g., a sensor that emits a laser beam onto the road surface 2, receives reflected light, and thereby detects an ice formed on the road surface 2.

For example, when the road surface 2 is frozen, it is assumed that the stop posture of the lean vehicle 1 when the road surface 2 is frozen becomes more unstable as compared to the stop posture of the lean vehicle 1 when the road surface 2 is not frozen. Thus, the execution section 22 evaluates the degree of danger at the time when the rider stands on the rider's feet on the road surface 2 based on whether the road surface 2 is frozen or the ratio of the frozen area in the road surface 2.

The road surface information can include information about a degree of wetness of the road surface 2. The information about the degree of wetness will be referred to as a wetness degree information. The wetness degree information includes information about whether the road surface 2 is wet. The wetness degree information also includes information about a ratio of a wet area in the road surface 2.

When the camera is used as the surrounding environment sensor 16, the acquisition section 21 may acquire the wetness degree information, e.g., by performing the image recognition processing with respect to the image captured by the camera. For example, the acquisition section 21 may acquire the wetness degree information from the image captured by the camera by using the method such as machine learning. However, the acquisition section 21 may acquire the wetness degree information based on the surrounding environment information that is acquired by the surrounding environment sensor 16 other than the camera. In this case, the surrounding environment sensor 16 may be the sensor that emits the laser beam onto the road surface 2, receives the reflected light, and thereby detects water on the road surface 2.

For example, it is assumed that the stop posture of the lean vehicle 1 becomes more unstable when the road surface 2 is wet as compared to the stop posture of the lean vehicle 1 when the road surface 2 is not wet. Thus, the execution section 22 evaluates the degree of danger at the time when the rider stands on the rider's feet on the road surface 2 based on whether the road surface 2 is wet or the ratio of the wet area in the road surface 2.

The execution section 22 may evaluate the degree of danger at the time when the rider stands on the rider's feet on the road surface 2 by using only one type of the road surface information or by using two or more types of the road surface information. However, the execution section 22 preferably evaluates the degree of danger based on two or more types of the road surface information in order to evaluate the degree of dangerous with high accuracy.

Here, the acquisition section 21 may be able to acquire the road surface information at various positions, separately, in the front-rear direction on the road surface 2. The front-rear direction is a direction along the traveling direction of the lean vehicle 1. The execution section 22 preferably predicts a stop position of the lean vehicle 1 and evaluates the degree of danger at the time when the rider stands on the rider's feet on the road surface 2 based on the road surface information at the stop position on the road surface 2. Accordingly, the degree of danger can be evaluated with high accuracy. For example, the execution section 22 may predict the stop position of the lean vehicle 1 based on the speed and the deceleration of the lean vehicle 1.

The control flow advances from S104 to S105. At S105, the execution section 22 determines whether the degree of danger evaluated at S104 is higher than a specified degree. When it is determined that the degree of danger evaluated at S104 is higher than the specified degree (YES at S105), the control flow advances to S106, and the notification operation is executed. On the other hand, when it is determined that the degree of danger evaluated at S104 is lower than the specified degree (NO at S105), the control flow illustrated in Fig. 3 ends.

The specified degree used at S105 is set such that it can be determined whether the degree of danger evaluated at S104 is high to such extent that the stop posture of the lean vehicle 1 is assumed to become excessively unstable. In other words, if the degree of danger evaluated at S104 is higher than the specified degree (YES at S105), it is assumed that the stop posture of the lean vehicle 1 becomes excessively unstable.

For example, when the slope angle of the road surface 2 is equal to or larger than a specified value, it is determined that the degree of danger is high (YES at S105). For example, when the quantity of the recessed portions, each of which has a dimension larger than a specified dimension, formed on the road surface 2 is equal to or larger than a specified quantity, it is determined that the degree of danger is high (YES at S105). For example, when the road surface 2 is unpaved, it is determined that the degree of danger is high (YES at S105). For example, when the road surface 2 is frozen, it is determined that the degree of danger is high (YES at S105). For example, when the road surface 2 is wet, it is determined that the degree of danger is high (YES at S105).

When it is determined that the degree of danger is high (YES at S105), the control flow advances to S106. At S106, the execution section 22 has the assistance system 10 execute, as the stop-assistance operation, the notification operation, and then the control flow illustrated in Fig. 3 ends. For example, the control flow illustrated in Fig. 3 ends when the notification operation is being performed for a specified time duration. Alternatively, for example, the control flow illustrated in Fig. 3 ends when the rider performs an input operation, i.e., inputs a signal, to stop the notification operation.

The notification operation is an operation that notifies the rider of information that helps the rider to stop the lean vehicle 1 safely. During the notification operation, the execution section 22 has the notification device 15 display various types of information or output sound (e.g., voice) corresponding to the various types of information.

The notification operation includes an operation that notifies the rider of the information about the degree of danger at the time when the rider stands on the rider's feet on the road surface 2, for example. The above information about the degree of danger may be a numerical value corresponding to the degree of danger. Alternatively, the information about the degree of danger may be the road surface information itself (for example, the information indicating that the road surface 2 is frozen).

The notification operation includes an operation that notifies the rider of information about a recommended position for the rider's feet on the road surface 2e. The execution section 22 determines the recommended position based on the road surface information.

For example, when the road surface 2 is tilted with respect to the lateral direction, the execution section 22 selects, as the recommended position, a higher position in a vertical direction in the road surface 2 from various positions on the left side and the right side of the lean vehicle 1. According to the example illustrated in Fig. 4, since the road surface 2 is inclined toward the right side, the execution section 22 selects a position on the right side of the lean vehicle 1 as the recommended position.

For example, when the road surface 2 has the recessed portion or the protrusion, the execution section 22 selects, as the recommended position, a position where neither the recessed portion nor the protrusion is formed from various positions on the left side and the right side of the lean vehicle 1. According to the example illustrated in Fig. 5, since the recessed portion 2a is formed on the left side of the lean vehicle 1, the execution section 22 selects a position on the right side of the lean vehicle 1 as the recommended position.

However, the recommended position is not limited to the position on the left side or the right side of the lean vehicle 1. For example, the recommended position may be a front left position, a rear left position, a front right position, or a rear right position of the lean vehicle 1. In addition, although the recommended position may be represented by the direction relative to the lean vehicle 1 as described above, the recommended position may not be a relative position to the lean vehicle 1 but may be an absolute position on the road surface 2.

The notification operation is not limited to use the notification device 15. For example, the notification operation may be executed by using a device mounted to a worn article by the rider (e.g., a helmet or gloves) instead of the notification device 15 mounted to the lean vehicle 1. In addition, for example, when the rider is notified of the information about the degree of danger at the time when the rider stands on the rider's feet on the road surface 2, such a notification may be executed by using a vibration generator. In this case, the notification may be executed by instantaneously decelerating the lean vehicle 1. The above instantaneous deceleration can occur by reducing output of the engine 11, by generating the braking force using the hydraulic pressure control unit 12, by changing a gear ratio of a transmission mechanism in the lean vehicle 1, or the like.

As described above, in the control flow illustrated in Fig. 3, the execution section 22 has the assistance system 10 execute, as the stop-assistance operation, the notification operation based on the road surface information. As described above, when the lean vehicle 1 is stopped, the rider stands on the rider's feet on the road surface 2 to support the lean vehicle 1. Here, stability of the stop posture of the lean vehicle 1 is significantly affected by a condition of the road surface 2. Thus, by executing the stop-assistance operation based on the road surface information, the stop posture of the lean vehicle 1 is appropriately stabilized. As a result, it is possible to suppress the lean vehicle 1 and the rider from falling. Therefore, it is possible to improve the safety of the lean vehicle 1.

The above description has been made on the example in which the notification operation is executed as the stop-assistance operation. However, as described above, the execution section 22 may have the assistance system 10 execute, as the stop-assistance operation, the operation other than the notification operation.

For example, the stop-assistance operation may include a posture stabilization operation that stabilizes a posture of a body of the lean vehicle 1. For example, during the posture stabilization operation, the execution section 22 moves a center of gravity of the lean vehicle 1 downward in the vertical direction. The execution section 22 may move the center of gravity of the lean vehicle 1 downward in the vertical direction by contracting the front suspension 13 and rear suspension 14. Alternatively, for example, during the posture stabilization operation, the execution section 22 may have a support member protrude from the body of the lean vehicle 1 to both of the left and right sides. The support member is a member used to support the lean vehicle 1 against falling. For example, a tip of the support member comes in contact with the road surface 2, and the lean vehicle 1 is supported by the support member.

The execution section 22 may have the assistance system 10 execute the posture stabilization operation as the stop-assistance operation based on the road surface information. For example, the execution section 22 evaluates the degree of danger at the time when the rider stands on the rider's feet on the road surface 2 based on the road surface information. Then, when the degree of danger is higher than the specified degree, the execution section 22 has the assistance system 10 execute the posture stabilization operation. As a result, when the lean vehicle 1 is stopped, it is possible to appropriately stabilize the stop posture by the posture stabilization operation. Therefore, it is possible to appropriately prevent the lean vehicle 1 and the rider from falling and thus to appropriately improve the safety of the lean vehicle 1.

In addition, the stop-assistance operation may include a position adjustment operation that adjusts a stop position of the lean vehicle 1. For example, during the stop-assistance operation, the execution section 22 appropriately controls the engine 11 and the hydraulic pressure control unit 12, so as to adjust the stop position of the lean vehicle 1 in the front-rear direction.

The execution section 22 may have the assistance system 10 execute the position adjustment operation as the stop-assistance operation based on the road surface information. For example, based on the road surface information, the execution section 22 evaluates the degree of danger at the time when the rider stands on the rider's feet on the road surface 2 at each of various positions in the front-rear direction on the road surface 2. Then, the execution section 22 has the assistance system 10 execute the position adjustment operation so as to reduce the degree of danger at the stop position of the lean vehicle 1 to be lower than the specified degree. As a result, when the lean vehicle 1 is stopped, it is possible to appropriately stabilize the stop posture by the position adjustment operation. Therefore, it is possible to appropriately suppress the lean vehicle 1 and the rider from falling and thus to appropriately improve the safety of the lean vehicle 1.

### <Effects of Controller>

A description will be made on effects of the controller 20 according to the embodiment of the present invention.

In the controller 20, the execution section 22 has the assistance system 10 execute the stop-assistance operation based on the road surface information acquired by the acquisition section 21. As a result, it is possible to stabilize the stop posture of the lean vehicle 1 at the stop and to thereby suppress the lean vehicle 1 and the rider from falling. Therefore, it is possible to improve the safety of the lean vehicle 1.

Preferably, in the controller 20, the acquisition section 21 acquires the road surface information based on the surrounding environment information of the lean vehicle 1. In this way, the road surface information can appropriately be acquired. In addition, any of the various types of the road surface information (for example, the slope information, the unevenness information, the paved surface information, the frozen degree information, the wetness degree information, and the like) can be acquired. Therefore, when the lean vehicle 1 is stopped, it is possible to further appropriately stabilize the stop posture by the stop-assistance operation.

Preferably, in the controller 20, the acquisition section 21 acquires the road surface information based on the detection result of the inertial measurement unit 17 mounted to the lean vehicle 1. In this way, the road surface information (for example, the slope information or the like) can appropriately be acquired. In particular, the slope information can be acquired with a high degree of accuracy when being used with the surrounding environment information. Therefore, when the lean vehicle 1 is stopped, it is possible to further appropriately stabilize the stop posture by the stop-assistance operation.

Preferably, in the controller 20, the road surface information includes the information about the gradient of the road surface 2 (that is, the slope information). Thus, when the lean vehicle 1 is stopped, the stop-assistance operation is executed according to the gradient of the road surface 2. As a result, the stop posture is suppressed from becoming unstable due to the gradient of the road surface 2.

Preferably, in the controller 20, the road surface information includes the information about the pavement condition of the road surface 2 (that is, the paved surface information). Thus, when the lean vehicle 1 is stopped, the stop-assistance operation is executed according to the pavement condition of the road surface 2. As a result, the stop posture is suppressed from becoming unstable due to the pavement condition of the road surface 2.

Preferably, in the controller 20, the road surface information includes the information about the degree of freezing of the road surface 2 (that is, the frozen degree information). Thus, when the lean vehicle 1 is stopped, the stop-assistance operation is executed according to the degree of freezing of the road surface 2. As a result, the stop posture is suppressed from becoming unstable due to the degree of freezing of the road surface 2.

Preferably, in the controller 20, the road surface information includes the information about the degree of wetness of the road surface 2 (that is, the wetness degree information). Thus, when the lean vehicle 1 is stopped, the stop-assistance operation is executed according to the degree of wetness of the road surface 2. As a result, the stop posture is suppressed from becoming unstable due to the degree of wetness of the road surface 2.

Preferably, in the controller 20, the road surface information includes the information about the unevenness of the road surface 2 (that is, the unevenness information). Thus, when the lean vehicle 1 is stopped, the stop-assistance operation is executed according to the unevenness of the road surface 2. As a result, the stop posture is suppressed from becoming unstable due to the unevenness of the road surface 2.

Preferably, in the controller 20, the stop-assistance operation includes the notification operation. As a result, when the lean vehicle 1 is stopped, it is possible to appropriately stabilize the stop posture by the notification operation. Therefore, it is possible to appropriately suppress the lean vehicle 1 and the rider from falling and thus to appropriately improve the safety of the lean vehicle 1.

Preferably, in the controller 20, the notification operation includes the operation that notifies the rider of the information about the degree of danger at the time when the rider stands on the rider's feet on the road surface 2. As a result, when the degree of danger is high at the time when the rider stands on the rider's feet on the road surface 2 at the stop of the lean vehicle 1, it is possible to notify the rider of such a fact. Therefore, it is possible to further appropriately stabilize the stop posture by the notification operation.

Preferably, in the controller 20, the notification operation includes the operation that notifies the rider of the information about the recommended position for the rider's feet to touch the road surface 2. As a result, when the lean vehicle 1 is stopped, it is possible to notify the rider of the recommended position for the rider's feet to touch the road surface 2. Therefore, it is possible to further appropriately stabilize the stop posture by the notification operation.

Preferably, in the controller 20, the stop-assistance operation includes the posture stabilization operation to stabilize the body posture of the lean vehicle 1. As a result, it is possible to appropriately stabilize the stop posture by the posture stabilization operation. Therefore, it is possible to appropriately suppress the lean vehicle 1 and the rider from falling and thus to appropriately improve the safety of the lean vehicle 1.

Preferably, in the controller 20, the stop-assistance operation includes the position adjustment operation to adjust the stop position of the lean vehicle 1. As a result, it is possible to appropriately stabilize the stop posture by the position adjustment operation. Therefore, it is possible to appropriately suppress the lean vehicle 1 and the rider from falling and thus to appropriately improve the safety of the lean vehicle 1.

## Claims

1. A controller (20) for an assistance system (10), the assistance system configured to execute an assistance operation for a rider of a lean vehicle (1), the controller comprising:
an execution section (22) that operates the assistance system (10) to execute the assistance operation; and
an acquisition section (21) that acquires a road surface information as information about a road surface (2) on which the lean vehicle (1) is traveling, wherein
the execution section (22) operates the assistance system (10) to execute, as the assistance operation, a stop-assistance operation based on the road surface information to assist the rider in stabilizing a stop posture of the rider.

2. The controller according to claim 1, wherein
the acquisition section (21) acquires the road surface information based on a surrounding environment information of the lean vehicle (1).

3. The controller according to claim 1 or 2, wherein
the acquisition section (21) acquires the road surface information based on a detection result of an inertial measurement unit (17) mounted to the lean vehicle (1).

4. The controller according to any one of claims 1 to 3, wherein
the road surface information includes information about a gradient of the road surface (2).

5. The controller according to any one of claims 1 to 4, wherein
the road surface information includes information about a pavement condition of the road surface (2).

6. The controller according to any one of claims 1 to 5, wherein
the road surface information includes information about a degree of freezing of the road surface (2).

7. The controller according to any one of claims 1 to 6, wherein
the road surface information includes information about a degree of wetness of the road surface (2).

8. The controller according to any one of claims 1 to 7, wherein
the road surface information includes information about unevenness of the road surface (2).

9. The controller according to any one of claims 1 to 8, wherein
the stop-assistance operation includes a notification operation that generates a warning to the rider.

10. The controller according to claim 9, wherein
the notification operation includes an operation that notifies the rider of information about a degree of danger at the time when the rider stands on the rider's feet on the road surface (2).

11. The controller according to claim 9 or 10, wherein
the notification operation includes an operation that notifies the rider of information about a recommended position that is a position of the rider's feet to be placed on the road surface (2).

12. The controller according to any one of claims 1 to 11, wherein
the stop-assistance operation includes a posture stabilization operation to stabilize a posture of a body of the lean vehicle (1).

13. The controller according to any one of claims 1 to 12, wherein
the stop-assistance operation includes a position adjustment operation to adjust a stop position of the lean vehicle (1).

14. A control method for an assistance system (10), the assistance system configured to execute an assistance operation for a rider of a lean vehicle (1), the control method comprising:
executing, using an execution section (22) of the controller (20), the assistance operation in a manner that the execution section (22) operates the assistance system (10) to execute the assistance operation; and
acquiring, using an acquisition section (21) of the controller (20), a road surface information as information about a road surface (2) on which the lean vehicle (1) is traveling, wherein
the execution section (22) operates the assistance system (10) to execute, as the assistance operation, a stop-assistance operation based on the road surface information to assist the rider in stabilizing a stop posture of the rider.

## Patentansprüche

1. Steuerung (20) für ein Assistenzsystem (10), wobei das Assistenzsystem dazu ausgelegt ist, einen Assistenzvorgang für einen Fahrer eines Neigefahrzeugs (1) auszuführen, wobei die Steuerung Folgendes umfasst:
einen Ausführungsabschnitt (22), der das Assistenzsystem (10) betätigt, um den Assistenzvorgang auszuführen; und
einen Erfassungsabschnitt (21), der eine Fahrbahnoberflächeninformation als eine Information über eine Fahrbahnoberfläche (2) erfasst, auf der das Neigefahrzeug (1) fährt, wobei
der Ausführungsabschnitt (22) das Assistenzsystem (10) betätigt, um als den Assistenzvorgang einen Anhalteassistenzvorgang basierend auf der Fahrbahnoberflächeninformation auszuführen, um den Fahrer bei einer Stabilisierung einer Anhaltehaltung des Fahrers zu assistieren.

2. Steuerung nach Anspruch 1, wobei
der Erfassungsabschnitt (21) die Fahrbahnoberflächeninformation basierend auf einer Information zur umliegenden Umgebung des Neigefahrzeugs (1) erfasst.

3. Steuerung nach Anspruch 1 oder 2, wobei
der Erfassungsabschnitt (21) die Fahrbahnoberflächeninformation basierend auf einem Detektionsergebnis einer an dem Neigefahrzeug (1) montierten Trägheitsmesseinheit (17) erfasst.

4. Steuerung nach einem der Ansprüche 1 bis 3, wobei die Fahrbahnoberflächeninformation eine Information über ein Gefälle der Fahrbahnoberfläche (2) umfasst.

5. Steuerung nach einem der Ansprüche 1 bis 4, wobei die Fahrbahnoberflächeninformation eine Information über einen Belagszustand der Fahrbahnoberfläche (2) umfasst.

6. Steuerung nach einem der Ansprüche 1 bis 5, wobei die Fahrbahnoberflächeninformation eine Information über einen Grad einer Vereisung der Fahrbahnoberfläche (2) umfasst.

7. Steuerung nach einem der Ansprüche 1 bis 6, wobei die Fahrbahnoberflächeninformation eine Information über einen Grad einer Nässe der Fahrbahnoberfläche (2) umfasst.

8. Steuerung nach einem der Ansprüche 1 bis 7, wobei die Fahrbahnoberflächeninformation eine Information über eine Unebenheit der Fahrbahnoberfläche (2) umfasst.

9. Steuerung nach einem der Ansprüche 1 bis 8, wobei der Anhalteassistenzvorgang einen Benachrichtigungsvorgang umfasst, der eine Warnung für den Fahrer erzeugt.

10. Steuerung nach Anspruch 9, wobei
der Benachrichtigungsvorgang einen Vorgang umfasst, der den Fahrer von einer Information über einen Grad einer Gefahr zu dem Zeitpunkt benachrichtigt, zu dem der Fahrer auf den Füßen des Fahrers auf der Fahrbahnoberfläche (2) steht.

11. Steuerung nach Anspruch 9 oder 10, wobei
der Benachrichtigungsvorgang einen Vorgang umfasst, der den Fahrer von einer Information über eine empfohlene Position benachrichtigt, die eine Position der auf der Fahrbahnoberfläche (2) zu platzierenden Füße des Fahrers ist.

12. Steuerung nach einem der Ansprüche 1 bis 11, wobei der Anhalteassistenzvorgang einen Haltungsstabilisierungsvorgang zum Stabilisieren einer Haltung einer Karosserie des Neigefahrzeugs (1) umfasst.

13. Steuerung nach einem der Ansprüche 1 bis 12, wobei der Anhalteassistenzvorgang einen Positionsanpassungsvorgang zum Anpassen einer Anhalteposition des Neigefahrzeugs (1) umfasst.

14. Steuerverfahren für ein Assistenzsystem (10), wobei das Assistenzsystem dazu ausgelegt ist, einen Assistenzvorgang für einen Fahrer eines Neigefahrzeugs (1) auszuführen, wobei das Steuerverfahren Folgendes umfasst:
Ausführen, unter Verwendung eines Ausführungsabschnitts (22) der Steuerung (20), des Assistenzvorgangs auf eine Weise, dass der Ausführungsabschnitt (22) das Assistenzsystem (10) betätigt, um den Assistenzvorgang auszuführen; und
Erfassen, unter Verwendung eines Erfassungsabschnitts (21) der Steuerung (20), einer Fahrbahnoberflächeninformation als eine Information über eine Fahrbahnoberfläche (2), auf der das Neigefahrzeug (1) fährt, wobei
der Ausführungsabschnitt (22) das Assistenzsystem (10) betätigt, um als den Assistenzvorgang einen Anhalteassistenzvorgang basierend auf der Fahrbahnoberflächeninformation auszuführen, um den Fahrer bei einer Stabilisierung einer Anhaltehaltung des Fahrers zu assistieren.

## Revendications

1. Contrôleur (20) pour un système d'assistance (10), le système d'assistance étant configuré pour exécuter une opération d'assistance pour un conducteur d'un véhicule léger (1), le contrôleur comprenant :
une section d'exécution (22) qui actionne le système d'assistance (10) pour exécuter l'opération d'assistance ; et
une section d'acquisition (21) qui acquiert des informations de surface de route en tant qu'informations relatives à une surface de route (2) sur laquelle le véhicule léger (1) se déplace, dans lequel
la section d'exécution (22) actionne le système d'assistance (10) pour exécuter, en tant qu'opération d'assistance, une opération d'assistance à l'arrêt sur la base des informations de surface de route pour aider le conducteur à stabiliser une position d'arrêt du conducteur.

2. Contrôleur selon la revendication 1, dans lequel la section d'acquisition (21) acquiert les informations de surface de route sur la base d'informations d'environnement aux alentours du véhicule léger (1).

3. Contrôleur selon la revendication 1 ou la revendication 2, dans lequel
la section d'acquisition (21) acquiert les informations de surface de route sur la base d'un résultat de détection d'une unité de mesure inertielle (17) montée sur le véhicule léger (1).

4. Contrôleur selon l'une quelconque des revendications 1 à 3, dans lequel
les informations de surface de route comprennent des informations relatives à un gradient de la surface de route (2).

5. Contrôleur selon l'une quelconque des revendications 1 à 4, dans lequel
les informations de surface de route comprennent des informations relatives à un état de la chaussée de la surface de route (2).

6. Contrôleur selon l'une quelconque des revendications 1 à 5, dans lequel
les informations de surface de route comprennent des informations relatives à un degré de gel de la surface de route (2).

7. Contrôleur selon l'une quelconque des revendications 1 à 6, dans lequel
les informations de surface de route comprennent des informations relatives à un degré d'humidité de la surface de route (2).

8. Contrôleur selon l'une quelconque des revendications 1 à 7, dans lequel
les informations de surface de route comprennent des informations relatives à une non-uniformité de la surface de route (2).

9. Contrôleur selon l'une quelconque des revendications 1 à 8, dans lequel
l'opération d'assistance à l'arrêt comprend une opération de notification qui génère un avertissement pour le conducteur.

10. Contrôleur selon la revendication 9, dans lequel l'opération de notification comprend une opération qui notifie au conducteur des informations relatives à un niveau de danger au moment où le conducteur se tient sur ses pieds sur la surface de route (2).

11. Contrôleur selon la revendication 9 ou la revendication 10, dans lequel
l'opération de notification comprend une opération qui notifie au conducteur des informations relatives à une position recommandée qui est une position des pieds du conducteur à placer sur la surface de route (2).

12. Contrôleur selon l'une quelconque des revendications 1 à 11, dans lequel
l'opération d'assistance à l'arrêt comprend une opération de stabilisation de position pour stabiliser une position d'une carrosserie du véhicule léger (1).

13. Contrôleur selon l'une quelconque des revendications 1 à 12, dans lequel
l'opération d'assistance à l'arrêt comprend une opération de réglage de position pour régler une position d'arrêt du véhicule léger (1).

14. Procédé de commande pour un système d'assistance (10), le système d'assistance étant configuré pour exécuter une opération d'assistance pour un conducteur d'un véhicule léger (1), le procédé de commande comprenant :
l'exécution, à l'aide d'une section d'exécution (22) du contrôleur (20), de l'opération d'assistance de telle manière que la section d'exécution (22) actionne le système d'assistance (10) pour exécuter l'opération d'assistance ; et
l'acquisition, à l'aide d'une section d'acquisition (21) du contrôleur (20), d'informations de surface de route en tant qu'informations relatives à une surface de route (2) sur laquelle le véhicule léger (1) se déplace, dans lequel
la section d'exécution (22) actionne le système d'assistance (10) pour exécuter, en tant qu'opération d'assistance, une opération d'assistance à l'arrêt sur la base des informations de surface de route pour aider le conducteur à stabiliser une position d'arrêt du conducteur.
